# FASCICULE DE BREVET EUROPEEN

(11) **EP 1 621 432 B1**
(45) Date de publication et mention de la délivrance du brevet: **15.11.2006**
(21) Numéro de dépôt: 04291895.3
(22) Date de dépôt: 26.07.2004
(51) Int. Cl.: B60T 8/00

(54) **Procédé et dispositif de gestion du freinage intérieur/extérieur pour un véhicule en décélération en virage**
Vorrichtung und Verfahren zur Bremssteuerung der Innen- bzw. Aussenräder bei einer Kurvenbremsung
Apparatus and method for right/left braking force distribution at cornering

(43) Date de publication de la demande: 01.02.2006
(73) Titulaire: Delphi Technologies, Inc., Troy, MI 48007 (US); Peugeot Citroen Automobiles SA, 78140 Vélizy Villacoublay (FR)
(72) Inventeur: Alvarez, Belen, 75015 Paris (FR); Groult, Xavier, 95470 Survilliers (FR); Blaise, Philippe, 25490 Dampiere les Bois (FR)
(74) Mandataire: Abello, Michel

(56) Documents cités:
- EP-A- 0 939 016
- US-B1- 6 322 167
- US-B1- 6 406 104

## Description

L'invention a pour domaine celui des fonctions de gestion du freinage d'un véhicule équipé d'un système de freinage dans lequel l'actionnement des étriers de frein est découplé de l'enfoncement effectif de la pédale de frein par le conducteur. Plus particulièrement, l'invention a pour domaine celui des fonctions destinées à augmenter la stabilité du véhicule abordant une courbe ou engagé dans une courbe.

Dans un virage, l'accélération centrifuge est la cause d'un transfert de charge latéral des masses suspendues du véhicule du côté intérieur du virage vers le côté extérieur, conduisant à un mouvement de roulis de la caisse. En conséquence, la répartition du poids du véhicule sur les roues est modifiée et la réaction de la route sur les roues situées du côté intérieur au virage, ou roues intérieures, tend à diminuer alors que la réaction de la route sur les roues situées du côté extérieur au virage, ou roues extérieures, tend à augmenter. La force de freinage, grandeur corrélée à la réaction de la route, qu'il est nécessaire d'appliquer sur une roue intérieure pour stopper son mouvement de rotation est réduite par rapport à la force de freinage qu'il est nécessaire d'appliquer sur une roue extérieure. Dans un cas limite, le transfert de charge est tel que la roue intérieure quitte le contact avec la route et il suffit d'une force de freinage de quelques Newtons pour stopper son mouvement de rotation.

Lorsque le conducteur freine en virage, si la force de freinage souhaitée par le conducteur était appliquée directement aux roues intérieures, cela augmenterait le glissement de celles-ci, avec la forte probabilité de conduire au blocage de celles-ci.

Par ailleurs, si la roue est en contact glissant avec la route, la composante tangentielle latérale de la réaction du sol sur la roue s'annule. Or c'est précisément cette composante qui permet au véhicule de tourner et de suivre une trajectoire courbe. Le pneumatique perd alors son pouvoir latéral par rapport au sol, et ceci d'autant plus qu'une force de freinage, qui est une force tangentielle longitudinale, est appliquée sur le pneumatique de manière à augmenter le glissement de la roue. En d'autres termes, un véhicule peut soit freiner beaucoup soit tourner beaucoup. Donc le glissement de la roue intérieure lors du freinage entraîne une perte du pouvoir latérale du pneumatique et donc l'instabilité du véhicule qui a tendance à ouvrir sa trajectoire.

Il est connu d'équiper les véhicules avec une fonction dite de contrôle de stabilité (ESP pour « Electronic Stability Program ») contrôlant la stabilité du véhicule dans les courbes. L'angle de lacet est l'angle entre l'axe longitudinal du véhicule et la tangente à la trajectoire souhaitée par le conducteur. Cette dernière est déterminée entre autre par l'angle de braquage du volant de direction. Lorsque l'angle de lacet est trop important, la fonction de contrôle de stabilité déclenche soit l'application d'un couple moteur supplémentaire soit un freinage supplémentaire. Ce freinage supplémentaire appliqué sur l'une des roues crée un moment autour de l'axe de lacet, axe vertical passant par le centre de gravité du véhicule. Ce moment supplémentaire a pour effet de faire tourner le véhicule autour de l'axe de lacet et de réduire l'angle de lacet de manière à retrouver une trajectoire stable.

La fonction de contrôle de stabilité, qui est une fonction de sécurité, est une fonction qui se déclenche dans des conditions extrêmes. Les seuils de déclenchement possèdent des valeurs élevées. De plus, le mode d'action consistant à freiner fortement sur l'une des roues pour remettre le véhicule sur la trajectoire correcte est brusque. Les passager du véhicule ressentent l'actionneme nt de la fonction ESP ce qui nuit à leur confort.

Il y a donc un besoin pour un système de freinage mettant en oeuvre un procédé permettant d'augment er à moindre coût la stabilité du véhicule en virage, alors que le conducteur freine, avant que les conditions pour le déclenchement d' une fonction ESP ne soient réunies. Un tel sytème est décrit dans le document US6406104. L'invention a pour objet un procédé de gestion du freinage pour augmenter la stabilité d'un véhicule en virage alors que le conducteur enfonce une pédale de frein pour atteindre une décélération souhaitée, le véhicule étant équipé d'un système de freinage comportant des étriers de frein actionnables en fonction d'une force de freinage cible et dans lequel au moins l'actionnement des étriers de frein équipant les roues arrière est découplé de l'enfoncement de la pédale de frein, caractérisé en ce qu'il comporte les étapes consistant à :
- Détecter une condition logique d'entrée comportant au moins un test de virage et un test de freinage; et tant que la condition logique d'entrée est vérifiée,
- Déterminer une force de freinage de base à partir de la décélération souhaitée ;
- Calculer, pour les roues intérieure et extérieure, une force de freinage corrigée à partir de la force de freinage de base pour que la force de freinage corrigée soit réduite par rapport à la force de freinage de base ;
- Moduler, pour la roue intérieure, la force de freinage corrigée pour obtenir une force de freinage de référence intérieure qui soit réduite par rapport à la force de freinage corrigée ; et,
- Appliquer la force de freinage corrigée en tant que force de freinage cible pour la roue arrière extérieure et la force de freinage de référence intérieure en tant que force de freinage cible sur la roue intérieure.

Cette étape de modulation consistant à déterminer la variation temporelle d'accélération latérale ; à comparer la variation d'accélération latérale à une variation seuil ; et, lorsque la variation d'accélération latérale est supérieure à ladite variation seuil, à calculer un gain de modulation qui est inférieur à l'unité et qui est une fonction décroissante de la variation d'accélération latérale ; et, à multiplier la force de freinage corrigée par le gain de modulation pour obtenir la force de freinage de référence intérieure.

De préférence, à l'étape de détection d'une condition logique d'entrée, le test de freinage est vérifié dès que la pédale de frein est enfoncée.

De préférence, à l'étape de calcul d'une force de freinage de base corrigée, la force de freinage de base est multipliée par un gain d'où résulte la force de freinage corrigée.

De préférence, le gain de base est une fonction croissante d'une vitesse instantanée du véhicule. De préférence encore, le gain de base est une fonction décroissante d'une accélération latérale du véhicule.

L'invention a également pour objet un logiciel de gestion du freinage contenant des instructions propres à être lues et stockées sur un support, lesdites instructions étant exécutables par un ordinateur hôte, caractérisé en ce que ledit logiciel met en oeuvre un procédé tel décrit ci-dessus.

L'invention a pour objet un contrôleur de freinage programmable mettant en oeuvre un procédé tel décrit ci-dessus, dans un véhicule équipé d'un système de freinage comportant des étriers de frein aptes à être actionnés en fonction d'une force de freinage cible et dans lequel au moins l'actionnement des étriers de frein équipant les roues arrière est découplé de l'enfoncement d'une pédale de frein, enfoncement correspondant à une décélération souhaitée par le conducteur, le contrôleur comportant un espace mémoire apte à stocker des instructions d'un logiciel, un calculateur apte à exécuter les instructions et une interface d'entrée/sortie connectable en entrée à une pluralité de capteurs dont est équipé le véhicule et en sortie à des unités d'actionnement d'étrier de frein, caractérisé en ce que le contrôleur est programmé pour comporter :
- un moyen de détection d'une condition logique d'entrée comportant un moyen de test d'une condition de virage et un moyen de test d'une condition de freinage, le moyen de test d'une condition de virage permettant de vérifier qu'une accélération latérale mesurée par un capteur d'accélération est supérieure à une accélération latérale seuil, et le moyen de test d'une condition de freinage permettant de vérifier que la pédale de frein est enfoncée ;
- Un moyen de détermination d'une force de freinage de base à partir de ladite décélération souhaitée ;
- Un moyen de calcul d'une force de freinage corrigée apte à corriger la force de freinage de base de sorte que la valeur de la force de freinage corrigée soit réduite par rapport à la valeur de la force de freinage de base ;
- Un moyen de modulation apte à moduler la force de freinage corrigée en fonction d'une variation d'accélération latérale de manière à obtenir une force de freinage de référence intérieure qui soit réduite par rapport à la force de freinage corrigée ; et,
- Un moyen d'émission de la force de freinage corrigée en tant que force de freinage cible pour la roue arrière extérieure, et de la force de freinage de référence intérieure en tant que force de freinage cible pour la roue arrière intérieure

L'invention a également pour objet un système de freinage pour véhicule comportant un contrôleur de freinage, des unités d'actionnement d'étriers de frein, et au moins des étriers de frein électromécaniques équipant des roues arrière du véhicule, caractérisé en ce que le contrôleur de freinage est un contrôleur de freinage programmable tel que décrit ci-dessus.

L'invention a pour objet, un véhicule comportant un système de freinage caractérisé en ce que le système de freinage est un système de freinage tel que décrit ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :

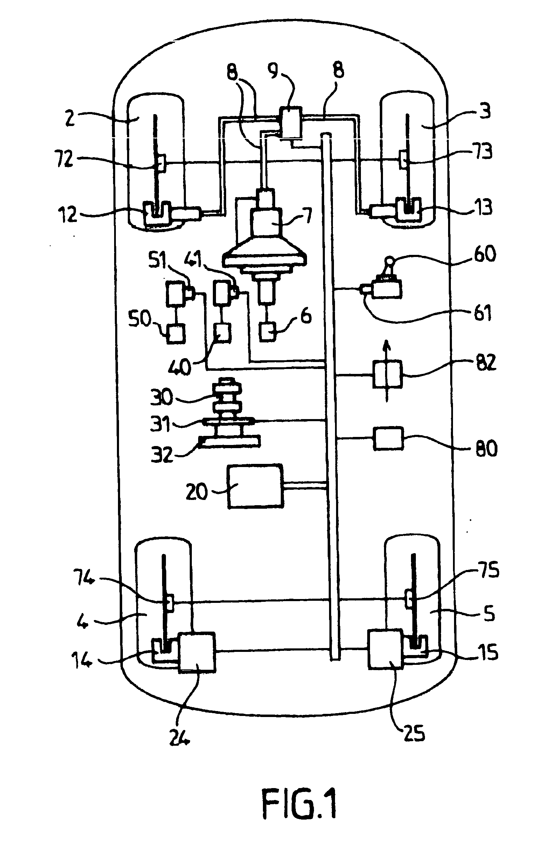

- la figure 1 représente schématiquement un véhicule équipé d'un système de freinage hybride ;
- les figures 2A, 2B et 2C représentent, sous la forme d'organigrammes, les différentes étapes d'un mode de réalisation du procédé selon l'invention ;
- la figure 3 représente une famille de courbes, indexée par l'accélération latérale, donnant le gain de base en fonction de la vitesse du véhicule ;
- la figure 4 représente les forces de freinage et les vitesses des roues arrière intérieure et extérieure au cours d'un essai dans lequel le procédé selon l'invention est actif.

L'augmentation de la stabilité en virage passe par la réduction de la valeur de la force de freinage effectivement appliquée aux roues intérieures. Ainsi, une roue intérieure sera moins sujette au glissement et le véhicule conservera au maximum sa faculté de virer et sa stabilité.

Puisque la force de freinage effectivement appliquée sur les roues intérieures ne correspond pas à la force de freinage souhaitée par le conducteur, le procédé selon l'invention ne peut être mis en oeuvre que dans un véhicule comportant un système de freinage découplé de l'actionnement de la pédale de frein, tout au moins pour l'actionnement des étriers de frein équipant les roues arrière. Le véhicule dans lequel l'invention est mise en oeuvre est de préférence un véhicule comportant un système de freinage hybride, mais pourrait également être un véhicule comportant un système de freinage entièrement géré électroniquement.

Un véhicule 1 comporte deux roues avant 2 et 3 et deux roues arrière 4 et 5. Le système de freinage hybride comporte une pédale de frein 6 reliée à un maître cylindre 7. Lorsque la pédale de frein 5 est enfoncée par le conducteur souhaitant que le véhicule soit freiné, le maître cylindre 7 génère une surpression hydraulique qui est propagée via l'unité hydraulique 9 et les canalisations 8 vers les étriers de frein hydrauliques 12 et 13 équipant respectivement les roues avant 2 et 3.

Les roues arrière 4 et 5 sont respectivement équipées d'étriers électromécaniques 14 et 15. Lorsque le conducteur appuie sur la pédale de frein 6, l'unité hydraulique 9 émet également un signal électrique S correspondant à la surpression générée par le maître cylindre 7, indiquant la valeur de la décélération longitudinale D_{L} souhaitée par le conducteur.

Le signal électrique S est appliqué sur une entrée d'un contrôleur de freinage 20. Le contrôleur de freinage 20 comporte au moins un calculateur et une mémoire. La mémoire est apte à stocker les instructions de différents programmes. Le calculateur est apte à exécuter ces instructions. Le contrôleur 20 comporte une interface d'entrée/sortie permettant en entrée l'acquisition de signaux provenant de différents capteurs et le stockage des valeurs correspondantes dans des espaces mémoire prédéfinis, et permettant en sortie l'émission de signaux en fonction de valeurs lues dans des espaces mémoire prédéfinis.

En réponse au signal S, le contrôleur 20 détermine si la pédale de frein est enfoncée (par exemple S différent de la valeur nulle). Puis, si tel est le cas, le contrôleur 20 calcule périodiquement les forces de freinage cibles intérieure et extérieure devant être respectivement appliquées par les étriers intérieur 14 et extérieur 15. Le contrôleur 20 émet en sortie des signaux de commande correspondant aux forces de freinage cibles en direction des actionneurs déportés 24 et 25 régulant l'actionnement des étriers arrière.

Plus précisément et de manière connue, le calcul par le contrôleur 20 d'une force de freinage cible consiste d'abord à déterminer une force de freinage de base à partir de la décélération souhaitée par le conducteur et qui correspond à l'enfoncement de la pédale de frein, puis à appliquer différentes fonctions afin de moduler la valeur du freinage de base. Par exemple une fonction d'anti-patinage des roues corrige la force de freinage de base en fonction de la valeur du glissement instantané des roues. Par exemple encore une fonction de contrôle de stabilité peut augmenter la force de freinage de base sur une des roues pour augmenter la stabilité du véhicule engagé dans une courbe. Chacune des ces fonctions, déclenchées en fonction de conditions d'entrée particulières, conduisent au calcul d'une force de freinage de référence ainsi que d'un drapeau indiquant le niveau de priorité de la force de freinage de référence ainsi calculée. Finalement, un dispositif d'arbitrage affecte la valeur de la force de freinage de référence ayant la priorité la plus élevée à la force de freinage cible à émettre en direction de l'étrier correspondant.

Par ailleurs, le véhicule 1 est équipé d'une pluralité de capteurs permettant de mesurer la valeur instantanée de différentes variables, de manière à définir un état instantané du véhicule. La colonne de direction 30 est, par exemple, équipée d'un capteur 31 permettant de mesurer l'angle de braquage que le conducteur donne au volant 32. L'angle de braquage est nul lorsque le conducteur souhaite aller tout droit et suivre une trajectoire rectiligne. L'angle braquage est par convention négatif (positif) lorsque le conducteur souhaite tourner vers a gauche (droite). Dans la suite de ce document, le virage est à droite est les roues intérieures au virage sont par conséquent les roues 3 et 5. La pédale d'accélération 40 comporte un capteur 41 permettant de mesurer le degré d'enfoncement de la pédale d'accélération. La pédale d'embrayage 50 comporte un capteur 51 permettant de déterminer l'état de l'embrayage : état débrayé dans lequel le moteur est couplé aux roues motrices, état embrayé dans lequel le moteur est découplé des roues motrices, et état de patinage intermédiaire dans lequel le couple moteur n'est que partiellement appliqué aux roues motrices. Enfin, le véhicule 1, s'il comporte une boîte de vitesses manuelle 60, peut être équipé d'un capteur 61 permettant de connaître la position du levier de vitesses.

Le véhicule 1 comporte, en outre, des capteurs permettant de déterminer l'état cinématique du véhicule. Chacune des roues 2-5 est équipée d'un capteur de vitesse de roue 72-75 permettant de mesurer la vitesse instantanée de rotation de la roue. Cette information permet au contrôleur 20 de calculer une vitesse instantanée V du véhicule. Pour mesurer l'accélération, le véhicule comporte par exemple un capteur d'accélération latérale 80 et un capteur d'accélération longitudinale 82. Les différents capteurs décrits sont connectés au contrôleur 20, via un réseau supportant par exemple le protocole CAN-Bus.

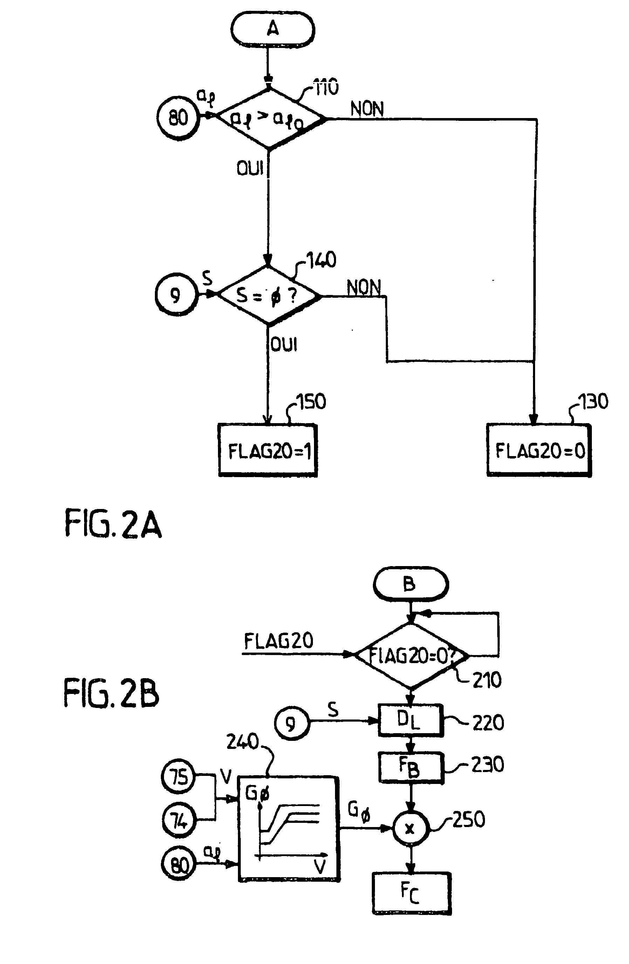

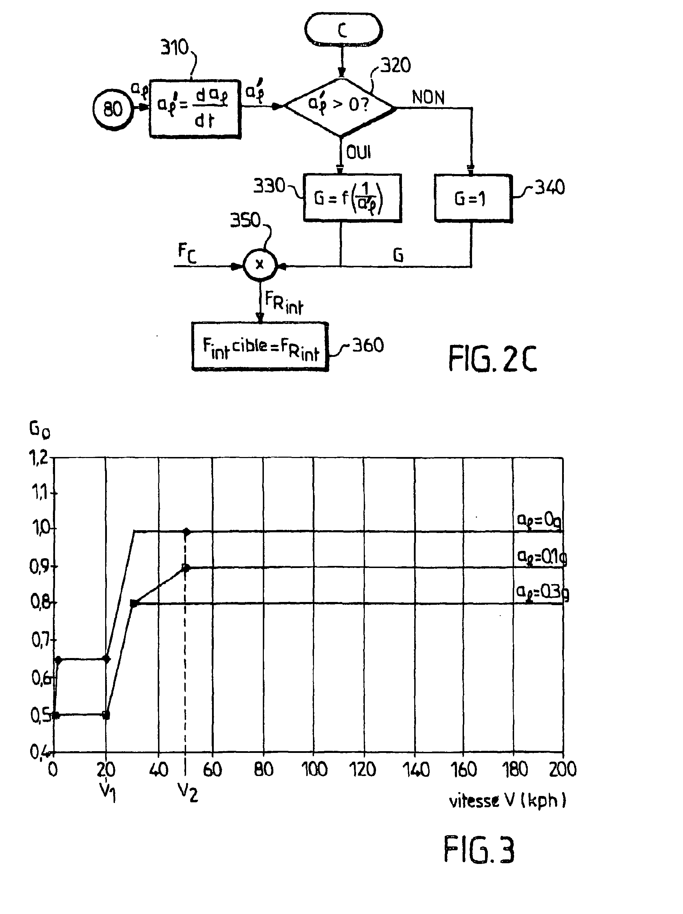

En se référant maintenant aux figures 2A, 2B et 2C, les différentes étapes du procédé selon l'invention vont être décrites. De préférence, le procédé est mis en oeuvre par le contrôleur 20 exécutant les instructions d'un logiciel dans le but de gérer le freinage, les instructions du logiciel étant stockées dans la mémoire du contrôleur 20.

Sur la figure 2A, l'exécution du logiciel débute par l'exécution d'un module A de détection d'une condition logique d'entrée. Lorsque cette condition logique d'entrée est vérifiée, l'état instantané du véhicule est compatible avec une gestion du freinage au moyen du procédé selon l'invention. Le module A débute par un test de virage : soit le véhicule est déjà engagé dans le virage au moment où le conducteur freine, soit le véhicule est en ligne droite et aborde un virage. Ces deux situations sont indiquées par l'accélération latérale instantanée mesurée par le capteur 80. Le test de virage comporte donc une comparaison 110 consistant à comparer la valeur de l'accélération latérale a₁ avec une accélération latérale seuil a₁₀ par exemple de 0,1 g. Si la comparaison 110 n'est pas vérifiée, l'exécution du module A affecte à l'étape 130 la valeur 0 à un drapeau FLAG20 indiquant ainsi que l'état instantané du véhicule n'est pas compatible avec la fonction de gestion du freinage selon l'invention.

En revanche, si la condition est vérifiée, le test de virage est suivi par un test de freinage 140 permettant de détecter si le conducteur enfonce la pédale de frein 6 dans le but de voir le véhicule freiné. Le test de freinage 140 consiste à comparer la valeur actuel du signal de pression S avec la valeur nulle. Lorsque le signal de pression est différent de zéro cela signifie que le conducteur actionne la pédale de frein 6. Lorsque ce test de freinage n'est pas vérifié, l'exécution du module A passe à l'étape 130. En revanche, si ce test de freinage 140 est vérifié alors que la condition d'accélération latérale est également vérifiée, la valeur 1 est affectée à la variable FLAG20 à l'étape 150.

Le module A est exécuté périodiquement de manière à déterminer si l'état instantané du véhicule est compatible par une prise en main du système de freinage par la fonction de freinage en courbe selon l'invention.

Il est à noter que si le conducteur freine alors que le véhicule est déjà engagé dans une courbe la gestion du freinage est déclenchée de manière à augmenter la stabilité du véhicule. La gestion du freinage est également déclenchée lorsqu'il a été anticipé que le véhicule va entrer dans une courbe. Dans le mode de réalisation actuellement préféré, l'anticipation du virage est faite au moyen de l'accélération latérale, mais d'autres variables peuvent être prises en compte pour anticiper cette situation.

Le module B est représenté sous forme d'organigramme sur la figure 2B. Il est exécuté périodiquement. Il débute par une étape 210 consistant à tester la valeur du drapeau FLAG20 lue à partir d'un espace mémoire dont l'adresse est prédéterminée. Si le drapeau FLAG20 indique un état compatible avec l'activation de la gestion des freins selon l'invention, l'exécution du module B passe à l'étape 220.

A l'étape 220 la valeur du signal de pression S permet de déterminer la valeur de la décélération longitudinale D_{L} souhaitée par le conducteur. A partir de la valeur de la décélération D_{L}, une force de freinage de base F_{B} est déterminée à l'étape 230. La détermination de F_{B} fait intervenir les caractéristiques du véhicule telles que la masse de la caisse, la raideur de la suspension, etc.

Si la force de freinage de base F_{B} était directement appliquée comme force de freinage cible sur les roues arrière, et en particulier sur la roue arrière intérieure, la probabilité serait grande que cette dernière parte en glissement. C'est la raison pour laquelle un gain de base G₀ est appliqué à la force de freinage de base F_{B} à l'étape 250 pour obtenir une force de freinage corrigée F_{C}. L'amplitude de la force de freinage corrigée F_{C} est inférieure à l'amplitude de la force de freinage de base F_{B}. Dans le mode de réalisation actuellement envisagé, la force de freinage corrigée est identique pour les deux roues arrière.

L'étape 240 permet de déterminer la valeur du gain de base G₀ en fonction de la vitesse longitudinale V et de l'accélération latérale a₁ du véhicule. Dans le mode de réalisation préféré, cette détermination se fait au moyen de courbes de calibration stockées dans la mémoire du contrôleur 20. Dans le cas d'un contrôleur aux capacités de calcul plus importantes, le gain de base G₀ pourrait être calculé en utilisant une fonction de la vitesse V et de l'accélération a₁.

La figure 3 représente une famille de courbes de calibration indexée par des valeurs de l'accélération latérale a₁. Ces courbes donnent la valeur du gain de base G₀ en fonction de la vitesse instantanée V. En deçà d'une vitesse seuil inférieure V₁, par exemple de 20 kilomètres par heure (km/h), à basse vitesse, le gain de base est faible. Au delà d'une vitesse seuil supérieure V₂, par exemple de 50 km/h, le gain de base G₀ est constant et vaut un gain maximum dépendant de l'accélération latérale a₁, mais toujours inférieur à l'unité. Le gain de base G₀ est à la fois une fonction croissante de la vitesse V et décroissante de l'accélération a₁.

La force de freinage corrigée F_{C} est une force de freinage qui pourrait être appliquée directement en tant que forces de freinage cible sur la roue arrière intérieure et sur la roue arrière extérieure. De préférence, une fonction de modulation est utilisée pour calculer la force de freinage cible intérieure à partir de la valeur de la force de freinage corrigée F_{C}. Une telle fonction de modulation est représentée à la figure 2C sous forme d'organigramme.

La fonction de modulation utilise la variation temporelle de l'accélération latérale a₁ donnée par le capteur 80. La variation d'accélération latérale a'₁ est calculée à l'étape 310. Puis la valeur instantanée de la variation d'accélération latérale a'₁ est comparée, à l'étape 320, à une variation d'accélération de référence qui est ici la valeur nulle. Si la variation d'accélération latérale a'₁ est négative, la valeur d'un gain de modulation G est portée à l'unité (étape 340). En revanche si la variation de l'accélération latérale a'₁ est strictement positive, la valeur du gain de modulation G est calculée à l'étape 330 en tant que fonction décroissante de la variation d'accélération latérale a'₁. Le gain de modulation G tend vers l'unité lorsque la variation d'accélération latérale a'₁ tend vers zéro. Le gain de modulation G tend vers zéro lorsque la variation d'accélération latérale a'₁ tend vers des valeurs importantes. A l'étape 350 la force de freinage corrigée F_{C} est multipliée par la valeur du gain de modulation G pour déterminer une force de freinage de référence intérieure F_{Rint}. A l'étape 360, cette force de freinage de référence intérieure F_{Rint} est affectée à la force de freinage cible F_{cible} émise vers la roue arrière intérieure. Il est évident pour l'homme du métier, que d'autres manières de moduler la force de freinage corrigée sont envisageables et entrent dans la portée de la présente invention.

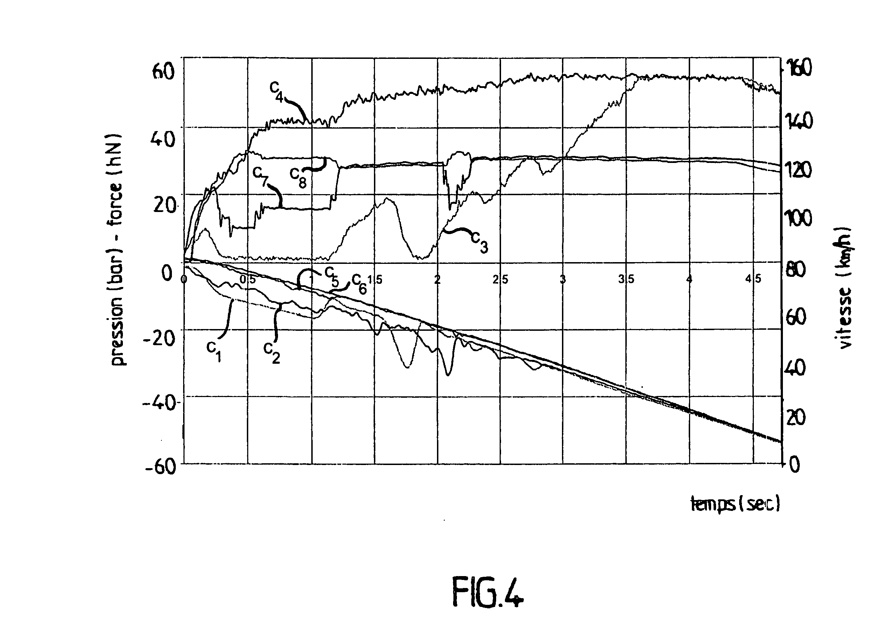

La figure 4 reproduit des courbes représentant l'évolution temporelle de grandeurs cinématiques mesurées au cours d'un essai effectué sur un véhicule mettant en oeuvre le procédé selon l'invention. Sur la figure 4, la courbe C₁ représente la vitesse de la roue arrière intérieure (vitesse proche de la vitesse longitudinale du véhicule si le glissement et l'angle de la roue ne sont pas pris en compte). La courbe C₂ représente la vitesse de la roue arrière extérieure. La courbe C₃ représente la force de freinage effectivement appliquée sur la roue arrière intérieure. La courbe C₄ représente la force de freinage effectivement appliquée sur la roue arrière extérieure et qui correspond à la force de freinage corrigée F_{C}. Les courbes C₅ et C₇ (C₆ et C₈) correspondent aux mêmes grandeurs physiques pour la roue avant intérieure (pour la roue avant extérieure). L'effet de la modulation de la force de freinage sur la roue intérieure se manifeste par le fait que la courbe C₃ est en dessous de la courbe C₄, et ceci tant que la variation d'accélération latérale est positive.

Dans le mode de réalisation actuellement préféré, la gestion du freinage est identique dans le cas où le véhicule est dans un virage puis que le conducteur freine et dans le cas où le conducteur freine puis tourne le volant pour aborder un virage ; En variante, une gestion du freinage différente peut être envisagée pour les deux situations.

Bien que l'invention ait été décrite en liaison avec un mode de réalisation particulier, il est bien évident qu'elle n'y est nullement limitée à celui-ci et qu'elle comprend tous les équivalents techniques des moyens décrits ainsi que leurs combinaisons si ceux- et celles-ci entrent dans le cadre de l'invention, telle que définie dans les revendications.

## Revendications

1. Procédé de gestion du freinage pour augmenter la stabilité d'un véhicule en virage alors que le conducteur enfonce une pédale de frein (6) pour atteindre une décélération souhaitée (D_{L}), le véhicule étant équipé d'un système de freinage comportant des étriers de frein (14, 15) actionnables en fonction d'une force de freinage cible (F_{cible}) et dans lequel au moins l'actionnement des étriers de frein équipant les roues arrière (4, 5) est découplé de l'enfoncement de ladite pédale de frein, ledit procédé comportant les étapes consistant à :
- Détecter une condition logique d'entrée comportant au moins un test de virage (110, 120) et un test de freinage (140) ; et tant que ladite condition logique d'entrée est vérifiée (210),
- Déterminer (220, 230) une force de freinage de base (F_{B}) à partir de la décélération souhaitée ;
- Calculer (240, 250), pour les roues intérieure et extérieure, une force de freinage corrigée (F_{C}) à partir de ladite force de freinage de base pour que la force de freinage corrigée soit réduite par rapport à la force de freinage de base ;
- Moduler (350), pour ladite roue intérieure, ladite force de freinage corrigée pour obtenir une force de freinage de référence intérieure (F_{Rint}) qui soit réduite par rapport à la force de freinage corrigée ; et,
- Appliquer ladite force de freinage corrigée en tant que force de freinage cible pour la roue arrière extérieure et ladite force de freinage de référence intérieure en tant que force de freinage cible sur la roue intérieure,
**caractérisé en ce que** ladite étape de modulation consiste à :
- Déterminer la variation temporelle d'accélération latérale (a'ₗ) ;
- Comparer la variation d'accélération latérale à une variation seuil ; et, lorsque la variation d'accélération latérale est supérieure à ladite variation seuil,
- Calculer un gain de modulation (G) qui est inférieur à l'unité et qui est une fonction décroissante de la variation d'accélération latérale ; et,
- multiplier ladite force de freinage corrigée par ledit gain de modulation pour obtenir ladite force de freinage de référence intérieure.

2. Procédé selon la revendication 1, **caractérisé en ce que**, à l'étape de détection d'une condition logique d'entrée, ledit test de virage est vérifié lorsqu'une accélération latérale instantanée (a₁) dudit véhicule est supérieure à une accélération latérale seuil (a₁₀).

3. Procédé selon la revendication 1, **caractérisé en ce que**, à l'étape de détection d'une condition logique d'entrée, ledit test de freinage est vérifié dès que ladite pédale de frein est enfoncée.

4. Procédé selon l'une des revendications 1 à 3, **caractérisé en ce que**, à l'étape de calcul d'une force de freinage de base corrigée, ladite force de freinage de base (F_{B}) est multipliée par un gain (G₀) d'où résulte ladite force de freinage corrigée (F_{C}).

5. Procédé selon la revendication 4, **caractérisé en ce que** ledit gain de base (G₀) est une fonction croissante d'une vitesse longitudinale (V) dudit véhicule et une fonction décroissante d'une accélération latérale (aₗ) dudit véhicule.

6. Logiciel de gestion du freinage contenant des instructions propres à être lues et stockées sur un support, lesdites instructions étant exécutables par un ordinateur hôte, **caractérisé en ce que** ledit logiciel met en oeuvre un procédé selon l'une des revendications 1 à 5.

7. Contrôleur de freinage programmable mettant en oeuvre un procédé selon l'une des revendications 1 à 5 dans un véhicule équipé d'un système de freinage comportant des étriers de frein (14, 15) aptes à être actionnés en fonction d'une force de freinage cible (F_{cible}) et dans lequel au moins l'actionnement des étriers de frein équipant les roues arrière (4, 5) est découplé de l'enfoncement d'une pédale de frein (6), enfoncement correspondant à une décélération souhaitée (D_{L}) par le conducteur, ledit contrôleur (20) comportant un espace mémoire apte à stocker des instructions d'un logiciel, un calculateur apte à exécuter lesdites instructions et une interface d'entrée/sortie connectable en entrée à une pluralité de capteurs dont est équipé ledit véhicule et en sortie à des unités d'actionnement d'étrier de frein, ledit contrôleur étant programmé pour comporter :
- un moyen (A) de détection d'une condition logique d'entrée comportant un moyen de test d'une condition de virage (110, 120) et un moyen de test d'une condition de freinage (140), ledit moyen de test d'une condition de virage permettant de vérifier qu'une accélération latérale mesurée par un capteur d'accélération est supérieure à une accélération latérale seuil, et ledit moyen de test d'une condition de freinage permettant de vérifier que ladite pédale de frein est enfoncée ;
- Un moyen de détermination (220, 230) d'une force de freinage de base (F_{B}) à partir de ladite décélération souhaitée ;
- Un moyen de calcul (240, 250) d'une force de freinage corrigée (F_{C}) apte à corriger ladite force de freinage de base de sorte que la valeur de la force de freinage corrigée soit réduite par rapport à la valeur de la force de freinage de base ;
- Un moyen de modulation apte à moduler ladite force de freinage corrigée de manière à obtenir une force de freinage de référence intérieure (F_{Rint}) qui soit réduite par rapport à la force de freinage corrigée ; et,
- Un moyen d'émission de ladite force de freinage corrigée en tant que force de freinage cible pour la roue arrière extérieure, et de ladite force de freinage de référence intérieure en tant que force de freinage cible pour la roue arrière intérieure,
**caractérisé en ce que** ledit moyen de modulation est apte à moduler ladite force de freinage corrigée en fonction d'une variation d'accélération latérale (a'ₗ).

8. Système de freinage pour véhicule comportant un contrôleur de freinage (20), des unités d'actionnement d'étriers de frein (24, 25), et au moins des étriers de frein électromécaniques (14, 15) équipant des roues arrière (4, 5) dudit véhicule, **caractérisé en ce que** ledit contrôleur de freinage est un contrôleur de freinage programmable selon la revendication 7.

9. Véhicule comportant un système de freinage **caractérisé en ce que** ledit système de freinage est un système de freinage selon la revendication 8.

## Claims

1. Braking management method for increasing the stability of a vehicle when cornering while the driver presses a brake pedal (6) to achieve a desired deceleration (D_{L}), the vehicle being fitted with a braking system comprising brake callipers (14, 15) that can be actuated as a function of a target braking force (F_{target}) and in which at least the actuation of the brake callipers fitted to the rear wheels (4, 5) is decoupled from the pressing of the said brake pedal, the said method comprising the steps consisting in:
- detecting an input logic condition comprising at least a cornering test (110, 120) and a braking test (140); and provided that the said input logic condition is verified (210),
- determining (220, 230) a base braking force (F_{B}) from the desired deceleration;
- computing (240, 250), for the inside and outside wheels, a corrected braking force (F_{C}) from the said base braking force so that the corrected braking force is less than the base braking force;
- modulating (350), for the said inside wheel, the said corrected braking force to obtain an inside reference braking force (F_{Rint}) that is less than the corrected braking force; and,
- applying the said corrected braking force as the target braking force for the outside rear wheel and the said inside reference braking force as the target braking force on the inside wheel,
**characterized in that** the said modulation step consists in:
- determining the temporal variation of lateral acceleration (a'₁);
- comparing the variation of lateral acceleration with a threshold variation; and, when the variation of lateral acceleration is greater than the said threshold variation,
- computing a modulation gain (G) that is less than unity and that is a decreasing function of the variation of lateral acceleration; and,
- multiplying the said corrected braking force by the said modulation gain to obtain the said inside reference braking force.

2. Method according to Claim 1, **characterized in that**, at the step of detecting an input logic condition, the said cornering test is verified when an instantaneous lateral acceleration (a₁) of the said vehicle is greater than a threshold lateral acceleration (a₁₀).

3. Method according to Claim 1, **characterized in that**, at the step of detecting an input logic condition, the said braking test is verified as soon as the said brake pedal is pressed.

4. Method according to one of Claims 1 to 3, **characterized in that**, at the step of computing a corrected base braking force, the said base braking force (F_{B}) is multiplied by a gain (G₀) from which the said corrected braking force (F_{C}) is derived.

5. Method according to Claim 4, **characterized in that** the said base gain (G₀) is an increasing function of a longitudinal velocity (V) of the said vehicle and a decreasing function of a lateral acceleration (a₁) of the said vehicle.

6. Braking management software containing instructions suitable for being read and stored on a medium, the said instructions being executable by a host computer, **characterized in that** the said software uses a method according to one of Claims 1 to 5.

7. Programmable braking controller using a method according to one of Claims 1 to 5 in a vehicle fitted with a braking system comprising brake callipers (14, 15) capable of being actuated as a function of a target braking force (F_{target}) and in which at least the actuation of the brake callipers fitted to the rear wheels (4, 5) is decoupled from the pressing of a brake pedal (6), a pressing corresponding to a deceleration (D_{L}) desired by the driver, the said controller (20) comprising a memory space capable of storing software instructions, a computer capable of executing the said instructions and an input/output interface that can be connected at the input to a plurality of sensors with which the said vehicle is fitted and at the output to brake calliper actuation units, the said controller being programmed to comprise:
- a means (A) for detecting an input logic condition comprising a means of testing a cornering condition (110, 120) and a means of testing a braking condition (140), the said means of testing a cornering condition making it possible to verify that a lateral acceleration measured by an acceleration sensor is greater than a threshold lateral acceleration, and the said means of testing a braking condition making it possible to verify that the said brake pedal is pressed;
- a means (220, 230) of determining a base braking force (F_{B}) from the said desired deceleration;
- a means (240, 250) of computing a corrected braking force (F_{C}) capable of correcting the said base braking force so that the value of the corrected braking force is less than the value of the base braking force;
- a modulation means capable of modulating the said corrected braking force so as to obtain an inside reference braking force (F_{Rint}) that is less than the corrected braking force; and
- a means of transmitting the said corrected braking force as a target braking force for the outside rear wheel, and of the said inside reference braking force as the target braking force for the inside rear wheel,
**characterized in that** the said modulation means is capable of modulating the said corrected braking force as a function of a variation of lateral acceleration (a'₁).

8. Vehicle braking system comprising a braking controller (20), brake calliper actuation units (24, 25) and at least electromechanical brake callipers (14, 15) fitted to the rear wheels (4, 5) of the said vehicle, **characterized in that** the said braking controller is a programmable braking controller according to Claim 7.

9. Vehicle comprising a braking system, **characterized in that** the said braking system is a braking system according to Claim 8.

## Patentansprüche

1. Bremssteuerungsverfahren zur Verbesserung der Kurvenstabilität eines Fahrzeugs, wenn der Fahrer ein Bremspedal (6) tritt, um eine gewünschte Verzögerung (D_{L}) zu erzielen, wobei das Fahrzeug mit einem Bremssystem ausgestattet ist, das Bremssättel (14, 15) aufweist, die mit einer Zielbremskraft (F_{cible}) betätigbar sind, und bei dem wenigstens die Betätigung der Bremssättel der Hinterräder (4, 5) vom Treten des Bremspedals entkoppelt ist, wobei das Verfahren die folgenden Schritte aufweist:
- Detektieren einer Eingangslogikbedingung, welche wenigstens einen Kurventest (110, 120) und einen Bremstest (140) aufweist; und, solange die Eingangslogikbedingung verifiziert ist (210),
- Bestimmen (220, 230) einer Basisbremskraft (F_{B}) ausgehend von der gewünschten Verzögerung;
- Berechnen (240, 250) einer korrigierten Bremskraft (F_{C}) für die Innen- und Außenräder ausgehend von der Basisbremskraft, damit die korrigierte Bremskraft verglichen mit der Basisbremskraft verringert wird;
- Modulieren (350) der korrigierten Bremskraft für die Innenräder, so dass man eine innere Referenzbremskraft (F_{Rint}) erhält, die gegenüber der korrigierten Bremskraft verringert ist; und
- Anwenden der korrigierten Bremskraft als Zielbremskraft für die Außenräder und der inneren Referenzbremskraft als Zielbremskraft auf **die Innenräder,**
**dadurch gekennzeichnet, dass** der Modulationsschritt aus folgenden Schritten besteht:
- Bestimmen der zeitlichen Veränderung der Seitenbeschleunigung (a'₁);
- Vergleichen der Veränderung der Seitenbeschleunigung mit einem Grenzwert der Veränderung; und, wenn die Veränderung der Seitenbeschleunigung größer als der Grenzwert der Veränderung ist,
- Berechnen eines Modulationsfaktors (G), der kleiner ist als Eins und der eine mit der Veränderung der Seitenbeschleunigung abnehmende Funktion ist; und
- Multiplizieren der korrigierten Bremskraft mit dem Modulationsfaktor, damit man die innere Referenzbremskraft erhält.

2. Verfahren gemäß Anspruch 1, **dadurch gekennzeichnet, dass** bei dem Schritt des Detektierens einer Eingangslogikbedingung der Kurventest verifiziert wird, wenn eine momentane Seitenbeschleunigung (a₁) des Fahrzeugs größer als eine Grenzseitenbeschleunigung (a₁₀) ist.

3. Verfahren gemäß Anspruch 1, **dadurch gekennzeichnet, dass** bei dem Schritt des Feststellens einer Eingangslogikbedingung der Bremstest verifiziert wird, sobald das Bremspedal getreten wird.

4. Verfahren gemäß einem der Ansprüche 1 bis 3, **dadurch gekennzeichnet, dass** bei dem Schritt des Berechnens einer korrigierten Basisbremskraft die Basisbremskraft (F_{B}) mit einem Faktor (G₀) multipliziert wird, woraus sich die korrigierte Bremskraft (F_{C}) ergibt.

5. Verfahren gemäß Anspruch 4, **dadurch gekennzeichnet, dass** der Basisfaktor (G₀) eine mit einer Längsgeschwindigkeit (V) des Fahrzeugs wachsende und eine mit einer Seitenbeschleunigung (a₁) des Fahrzeugs abnehmende Funktion ist.

6. Bremssteuerungsprogramm, welches lesbare und auf einem Träger speicherbare Instruktionen enthält, wobei die Instruktionen von einem Host-Computer ausführbar sind, **dadurch gekennzeichnet, dass** das Programm ein Verfahren gemäß einem der Ansprüche 1 bis 5 durchführt.

7. Programmierbare Bremssteuerung, welche ein Verfahren gemäß einem der Ansprüche 1 bis 5 in einem Fahrzeug durchführt, das mit einem Bremssystem ausgerüstet ist, welches Bremssättel (14, 15) aufweist, die mit einer Zielbremskraft (F_{cible}) betätigbar sind, und bei dem wenigstens die Betätigung der Bremssättel der Hinterräder (4, 5) vom Treten des Bremspedals (6) entkoppelt ist, wobei das Hinabtreten einer vom Fahrer gewünschten Verzögerung (D_{L}) entspricht, wobei die Steuerung (20) einen zum Speichern der Befehle eines Programms geeigneten Speicherplatz, einen zum Ausführen der Befehle geeigneten Rechner und ein Eingangs-/Ausgangs-Interface aufweist, das am Eingang mit mehreren Sensoren, mit denen das Fahrzeug ausgestattet ist, und am Ausgang mit Betätigungseinheiten der Bremssättel verbunden werden kann, wobei die Steuerung so programmiert ist, dass sie folgende Elemente aufweist:
- ein Mittel (A) zum Detektieren einer Eingangslogikbedingung, welches ein Mittel zum Testen einer Kurvenbedingung (110, 120) und ein Mittel zum Testen einer Bremsbedingung (140) aufweist, wobei das Mittel zum Testen einer Kurvenbedingung es ermöglicht, zu verifizieren, ob eine durch einen Beschleunigungssensor gemessene Seitenbeschleunigung größer als eine Grenzseitenbeschleunigung ist und das Mittel zum Testen einer Bremsbedingung es ermöglicht, zu verifizieren, ob das Bremspedal getreten ist;
- ein Mittel zum Bestimmen (220, 230) einer Basisbremskraft (F_{B}) ausgehend von der gewünschten Verzögerung;
- ein Mittel zum Berechnen (240, 250) einer korrigierten Bremskraft (F_{C}), welches die Basisbremskraft so korrigieren kann, dass der Wert der korrigierten Bremskraft verglichen mit dem Wert der Basisbremskraft verringert ist;
- ein Modulationsmittel, welches die korrigierte Bremskraft so modulieren kann, dass man eine innere Referenzbremskraft (F_{Rint}) erhält, die verglichen mit der korrigierten Bremskraft verringert ist; und
- ein Mittel zum Ausgeben der korrigierten Bremskraft als Zielbremskraft für das hintere Außenrad und der inneren Referenzbremskraft als Zielbremskraft für das innere Hinterrad,
**dadurch gekennzeichnet, dass** das Modulationsmittel die korrigierte Bremskraft abhängig von einer Änderung der Seitenbeschleunigung (a'ₗ) modulieren kann.

8. Bremssystem für ein Fahrzeug, das eine Bremssteuerung (20), Einheiten zur Betätigung von Bremssättel (24, 25) und wenigstens elektromechanische Bremssättel (14, 15) an den Hinterrädern (4, 5) des Fahrzeugs aufweist,
**dadurch gekennzeichnet, dass** die Bremssteuerung eine programmierbare Bremssteuerung gemäß Anspruch 7 ist.

9. Fahrzeug mit einem Bremssystem, **dadurch gekennzeichnet, dass** das Bremssystem ein Bremssystem gemäß Anspruch 8 ist.
